# FASCICULE DE BREVET EUROPEEN

(11) **EP 1 394 121 B1**
(45) Date de publication et mention de la délivrance du brevet: **21.01.2009**
(21) Numéro de dépôt: 03291890.6
(22) Date de dépôt: 30.07.2003
(51) Int. Cl.: C02F 1/66, C02F 9/00

(54) **Procédé de traitement d'effluents liquides contaminés**
Verfahren zur Behandlung von kontaminierten Abfallflüssigkeiten
Process for the treatment of contaminated liquid effluents

(30) Priorité: 30.07.2002 FR 0209701
(43) Date de publication de la demande: 03.03.2004
(73) Titulaire: Guichard, Philippe, 54290 Lorey (FR); Braun, Jean-Paul, 67000 Strasbourg (FR); Arth, Guy, 57680 Le Mud (FR); Guenois, Gilles, 88130 Charmes (FR); Weiss, Olivier, 88500 Mericourt (FR)
(72) Inventeur: Guichard, Philippe, 54290 Lorey (FR); Braun, Jean-Paul, 67000 Strasbourg (FR); Wackermann, Guy, 67200 Strasbourg (FR)
(74) Mandataire: Gallochat, Alain

(56) Documents cités:
- EP-A- 0 534 364
- FR-A- 2 365 525
- FR-A- 2 792 307
- GB-A- 2 206 342
- US-A- 3 801 501

## Description

La présente invention concerne un nouveau procédé de traitement d'effluents liquides contaminés.

L'évacuation d'effluents liquides vers les réseaux d'assainissement locaux et les problèmes de pollution et environnementaux qui s'y rattachent présente une difficulté croissante et mérite une attention de plus en plus grande. Cette remarque est d'autant plus valable que ces effluents, lorsqu'ils sont contaminés, c'est-à-dire comportant des résidus micro-organiques et/ou une flore microbienne, présentent un risque certain pour l'environnement et en premier lieu pour les êtres humains.

Le procédé faisant l'objet de la présente invention est décrit dans la revendication 1. Il comporte deux phases, une première où une solution acide est ajoutée aux effluents à décontaminer récupérés sur au moins un poste de travail d'une installation, et une deuxième, où l'on provoque un choc de pH puissant grâce à une solution fortement alcaline qui est ajoutée aux eaux résiduaires récupérées à l'issue de la première phase.

Les modes de réalisation préférée sont définies dans les revendications 2-6.

Selon un mode de réalisation de l'invention, la solution acide est introduite dans le réseau d'alimentation d'eau, en amont du poste de travail, la solution alcaline étant ajoutée en aval dudit poste de travail.

Selon un autre mode de réalisation du procédé selon l'invention, l' apport en solution acide est prévu en aval du poste de travail, mais préalablement à l'apport en solution alcaline.

Le dispositif de mise en oeuvre du procédé de traitement d'effluents liquides contaminés sera mieux compris en se reportant aux figures données à titre indicatif et nullement limitatif parmi lesquelles :
- la figure 1 représente schématiquement un dispositif de mise en oeuvre du procédé selon une première variante d'exécution,
- la figure 2 représente schématiquement un dispositif de mise en oeuvre du procédé selon une autre variante d'exécution.

Ainsi qu'il a été précédemment mentionné, le procédé selon l'invention vise à traiter les effluents liquides contaminés, c'est-à-dire des liquides infectieux ou contenant des particules vivantes ou en suspension, rejetés par les collectivités, par les industriels ou par les utilisateurs privés.

Le procédé selon l'invention trouve son application dans les installations comportant un ou plusieurs postes de travail où sont récupérés des effluents liquides contaminés tels que précédemment définis.

Selon une première variante, le procédé selon l'invention consistera en une première phase au cours de laquelle une solution acide sera introduite dans le réseau d'alimentation d'eau, en amont du ou des postes de travail ; il pourra alors être envisagé que cette introduction soit réalisée grâce à un système d'aspiration automatique qui diffusera la solution acide proportionnellement au volume d'eau tiré du robinet ou de la douchette de l'utilisateur. La concentration en solution acide sera modulable en fonction du risque et des impératifs des installations (laboratoires, ateliers...).

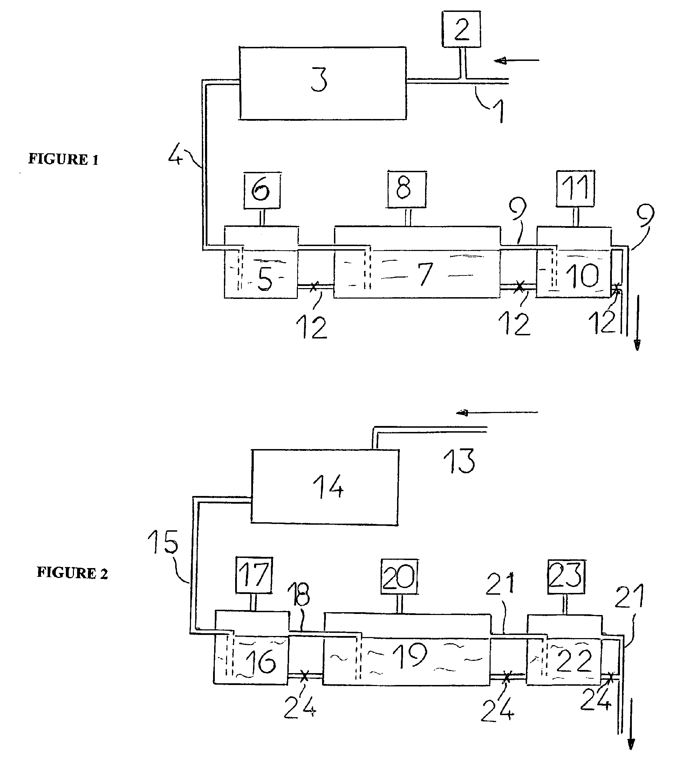

La figure 1 illustre schématiquement le dispositif de mise en oeuvre de la variante de procédé qui vient d'être décrite ; ce dispositif comprendra une arrivée d'eau 1 (réseau d'alimentation) sur laquelle est branché un doseur 2 de solution acide. L'eau ainsi acidifiée est utilisée sur le plan de travail 3 ; à la sortie de ce dernier, le conduit d'évacuation 4 récupère les effluents liquides encore en partie contaminés. Préférentiellement, ces effluents seront alors stockés dans une cuve 5 augmentant ainsi le temps de contact entre lesdits effluents et la solution acide ; optionnellement, un autre doseur 6 de solution acide permettra de maintenir le pH à sa valeur souhaitée. Cette variante, incluant la cuve 5 et le doseur 6, trouvera plus particulièrement son intérêt lorsque tous les postes de travail de l'installation ne seront pas alimentés par une eau acidifiée grâce à un doseur 2 ou équivalent. Les effluents seront finalement réunis dans une citerne 7 sur laquelle est adapté un doseur 8 de solution fortement alcaline. Le procédé mis en oeuvre s'accompagne d'un choc de pH puissant, de sorte que les eaux résiduaires désinfectées/décontaminées pourront être évacuées par le conduit 9 vers le réseau d'assainissement local. Selon une option, il sera possible d'intercaler entre la citerne 7 où est injectée la solution alcaline et le conduit 9, une autre citerne 10 munie d'un doseur 11 de solution acide permettant ainsi une neutralisation des effluents liquides décontaminés avant leur évacuation vers le réseau d'assainissement local. Un système de purge 12 pourra également être prévu.

Selon une deuxième variante du procédé selon l'invention, le traitement acide se fait en aval du ou des plans de travail ; les effluents liquides contaminés seront donc acidifiés juste avant de subir le choc de pH puissant précité grâce à la solution fortement alcaline.

La figure 2 illustre schématiquement un dispositif de mise en oeuvre de la deuxième variante du procédé selon l'invention ; on peut y voir l'arrivée d'eau 13 utilisée sur le plan de travail 14, un conduit 15 évacuant les effluents liquides contaminés qui seront alors stockés dans un réservoir 16, avant d'être acidifiés grâce au doseur 17 de solution acide. Un conduit d'évacuation 18 situé en partie haute du réservoir 16 permettra aux effluents liquides contaminés de se déverser par trop plein dans une citerne 19, d'un volume supérieur à celui du réservoir 16, et qui recevra une solution fortement alcaline grâce au doseur 20; un conduit de départ 21 permettra de recueillir les effluents désinfectés/décontaminés en vue de leur évacuation vers le réseau d'assainissement local. De même que dans la première variante, il sera possible d'intercaler, entre la citerne 19 où est injectée la solution alcaline et le réseau d'assainissement, un ensemble citerne 22 et doseur 23 de solution acide permettant de neutraliser les effluents liquides provenant de la citerne 19. En outre, un système de purge 24 sera avantageusement prévu.

Le temps de contact des effluents liquides dans la cuve 5, dans les citernes 7, 10, dans le réservoir 16 ou dans les citernes 19, 22 est fonction du risque (infectiosité des effluents quantitativement et qualitativement) et des impératifs du laboratoire ou plus généralement de l'installation concernée. Préférentiellement, ce temps de contact sera surdimensionné afin de réaliser de meilleures performances, c'est-à-dire une suppression, ou à tout le moins une limitation maximale, du risque susmentionné. De même, le volume de la cuve 5, du réservoir 16 et des citernes 7, 10, 19, 22 ainsi que la quantité de solution acide et celle de solution alcaline dépendent du volume d'effluents contaminés à traiter.

Quelle que soit la variante utilisée pour le procédé selon l'invention, la demanderesse a choisi des solutions acide et alcaline correspondant à des impératifs précis.

La solution acide sera préférentiellement un liquide anti-tartre et détartrant, désinfectant, séquestrant et détergent ; il a été trouvé que les meilleurs résultats étaient obtenus en utilisant une combinaison d'ammoniums quaternaires, d'acide phosphorique et préférentiellement de matières actives détergentes. En solution, cette combinaison agit par la synergie acide phosphorique/ammoniums quaternaires. Il a été montré qu'une telle combinaison était microbicide sur les levures ainsi que sur les bactéries grampositives et gramnégatives : *Saccharomyces carisbergensis, Saccharomyces cerevisiae, Saccharomyces pastorianus, Brettanomyces bruxellensis, Byssochlamis fulva, Penecillium citricus, Aspergilus niger, Staphylococcus aureus, Streptococcus faecalis, Escherichia coli, Pseudomonas aeruginosa* sont des exemples de levures et bactéries traitées par le présent procédé. De tels résultats pourront être obtenus en utilisant une solution aqueuse comprenant notamment de l'ordre de 10% d'acide phosphorique et de l'ordre de 5% d'halogénures d'ammoniums quaternaires, assurant un pH situé entre 1,5 et 3.

Pour sa part, la solution alcaline sera préférentiellement un liquide nettoyant, désinfectant et dégraissant ; une solution alcaline à base de soude répond à ces exigences. Cet apport de solution fortement alcaline permettra de réaliser le choc de pH puissant permettant de supprimer la flore indésirable, le pH des eaux résiduaires issues de la première phase se situant, après adjonction de la solution alcaline, entre 12 et 13.

Différents essais ont été menées pour optimiser les paramètres de la solution alcaline ; à titre d'exemple, les résultats suivants sont donnés :

| | | X | | | | |
|---|---|---|---|---|---|---|
| Souche | N' | Concentration en pourcentage (v/v) au contact avec les microorganismes | | | | |
| | | **0,50** | **0,75** | **1,00** | **2,50** | **5,00** |
| *Pseudomonas aeruginosa* | 101 | + | + | + | 0 | 0 |
| *Escherichia coli* | 78 | + | + | + | 0 | 0 |
| | | **3,00** | **3,50** | **4,00** | **4,50** | **5,00** |
| *Staphylococcus aureus* | 112 | 6 | 3 | 0 | 0 | 0 |
| *Enterococcus hirae* | 79 | 1 | 0 | 0 | 0 | 0 |
| | | **0,50** | **0,75** | **1,00** | **2,50** | **5,00** |
| Lactobacillus plantarum | 127 | 19 | 12 | 1 | 0 | 0 |

Dans le tableau ci-dessus :
- N' : désigne le témoin filtration
- X : désigne l'essai
- + : signifie qu'il y a plus de 150 colonies

Il est rappelé que sont considérées comme bactéricides les concentrations pour lesquelles X est inférieur ou égal à N' ; dans le cas présent, une concentration de 3% correspond, pour la solution alcaline, au caractère bactéricide.

En partant de cette même concentration, cette solution a été étudiée pour son caractère virucide ; selon la norme AFNOR NF T 72-180 (décembre 1989), un produit est qualifié de virucide si le taux de réduction minimal en souches virales au contact du produit est de 4 log.

Dans le cas présent, dès 15 minutes, la réduction était de 4,7 pour l'Entérovirus polio 1, souche SABIN, de 4,7 pour l'Orthopoxvirus de la vaccine et de plus de 6,9 pour l'Adénovirus type 5 (ces réductions atteignaient respectivement les valeurs suivantes au bout de 60 minutes : > 5,5 ; > 5,9 ; > 6,9.

Selon le cas, il pourra également être préféré une solution délivrée par les doseurs 6, 17 qui soit plus, voire beaucoup plus, acide que celle délivrée par les doseurs 2, 11 et 23 ; cela permettra d'avoir un choc de pH encore plus puissant et donc des résultats encore meilleurs.

Le procédé et le dispositif selon l'invention trouvent leur application dans les domaines :
- de la recherche ;
- du secteur hospitalier, vétérinaire, agro-alimentaire, funéraire ;
- de l'élevage, de l'abattage, de l'équarrissage ;
- du secteur laitier (production de lait, laiterie, fromagerie) ;
- de tout autre secteur où l'activité débouche sur le rejet de liquides contaminés, dangereux pour l'environnement.

## Revendications

1. Procédé de traitement bactéricide d'effluents liquides contaminés provenant de rejets hospitaliers, vétérinaires, funéraires ou de laboratoires de recherche récupérés sur au moins un poste de travail d'une installation, du type comprenant une première phase d'acidification suivie d'une deuxième phase consistant en un passage en milieu fortement alcalin, **caractérisé en ce que** la solution acide est à base d'acide phosphorique et d'ammoniums quaternaires de telle sorte que les eaux résiduaires issues de la phase d'acidification ont un pH se situant entre 1,5 et 3, et **en ce que** la solution alcaline à base de soude est utilisée de telle sorte que le pH des eaux résiduaires à l'issue de la phase d'alcalinisation se situe entre 12 et 13.

2. Procédé selon la revendication 1 **caractérisé en ce que** ladite solution comprend notamment de l'ordre de 10 % d'acide phosphorique et de l'ordre de 5 % d'halogénures d'ammoniums quaternaires.

3. Procédé selon l'une des revendications 1 ou 2 **caractérisé en ce que** la phase d'acidification se situe en amont du ou des postes de travail, la phase d'alcalinisation s'effectuant en aval dudit ou desdits postes.

4. Procédé selon l'une quelconque des revendications 1 à 3 **caractérisé en ce qu'**un deuxième apport en solution acide est prévu, en aval dudit ou desdits postes de travail, préalablement à l'apport en solution alcaline.

5. Procédé selon l'une des revendications 1 ou 2 **caractérisé en ce que** les deux phases s'effectuent en aval dudit ou desdits postes de travail, l'apport en solution acide s'effectuant préalablement à l'apport en solution alcaline.

6. Procédé selon l'une quelconque des revendications 1 à 5 **caractérisé en ce qu'**un apport supplémentaire en solution acide est prévu après l'apport en solution alcaline.

## Claims

1. Process for the bactericidal treatment of contaminated liquid effluents produced by hospital, veterinary, funeral or research laboratories discharges which have been brought together on at least one working post of an installation, of a type comprising a first step of acidification followed by a second step consisting in a passage into a strongly basic medium, **characterized in that** the acid solution is phosphoric acid-based and quaternary ammoniums-based, so that the pH of the residual waters obtained after the acidification step is between 1,5 and 3, the alkaline solution being soda-based, so that the pH of the residual waters obtained after the alkalinisation step is between 12 and 13.

2. Process according to claim 1, **characterized in that** said acid solution comprises among others around 10% of phosphoric acid and around 5% of quaternary ammonium halides.

3. Process according to claims 1 or 2, **characterized in that** the acidification step occurs before the working post(s), the alkalinisation step being executed after said working post(s).

4. Process according any of claims 1 to 3, **characterized in that** a further amount of acid solution is provided after said working post(s), prior to the introduction of the alkaline solution.

5. Process according to claims 1 or 2, **characterized in that** both steps occur after the working post(s), the acid solution being provided before the alkaline solution.

6. Process according any of claims 1 to 5, **characterized in that** a further acid solution is provided after the alkaline solution.

## Patentansprüche

1. Verfahren zur bakteriziden Behandlung von ausfliesenden und ansteckenden Flüssigkeiten aus Krankenhäusern, tierärztlichen Institutionen, Bestattungsunternehmen und Forschungslaboratorien, die mindestens an einer Arbeitstation der jeweiligen Installation vorgenommen werden, wenn eine erste Phase der Säuerung durchgeführt wurde und in Folge einen hoch alkalischen Eingriff als zweite Phase stattfindet **dadurch gekennzeichnet dass** die aus der Versäuerungsphase, mittels Phosphorsäure und quartärem Amonium, entstandene Flüssigkeit muss alsdann einen pH-Wert zwischen 1,5 und 3 erreicht haben, und die alkalische Lösung aus Soda wird so engepasst, dass der pH-Wert der Abwässer nach Abschluss der alkalischen Phase zwischen 12 und 13 liegt.

2. Verfahren nach Anspruch 1, **dadurch gekennzeichnet dass** die so genannte Lösung aus 10% Phosphorsäure und ungefähr 5% quartärem Amonium Halogenid besteht.

3. Verfahren nach einem der Ansprüche 1 oder 2, **dadurch gekennzeichnet dass** die so genannte Säuerungsphase oberhalb der oder den jeweiligen Arbeitstationen vorgeht und die Alkalisierphase abwärts getätigt wird.

4. Verfahren nach einem der Ansprüche 1 bis 3, **dadurch gekennzeichnet dass** eine zweite zusätzliche Säuerungsphase abwärts der jeweiligen Arbeitstationen durch Zugabe einer Alkalilösung vorgeht.

5. Verfahren nach einem der Ansprüche 1 oder 2, **dadurch gekennzeichnet dass** die beiden Phasen abwärts von der jeweiligen Arbeitstation sich vollziehen, und die Eingabe der Säure vor der alkalinischen Lösung erfolgt.

6. Verfahren nach einem der Ansprüche 1 bis 5, **dadurch gekennzeichnet dass** die Beigabe einer Zusätzlichen sauren Lösung vorgesehen ist nach der alkalischen.
